# DEMANDE DE BREVET EUROPEEN

(11) **EP 4 761 021 A1**
(43) Date de publication de la demande: **17.06.2026**
(21) Numéro de dépôt: 25222953.9
(22) Date de dépôt: 12.12.2025
(51) Int. Cl.: H02B 1/30, H01H 11/00, H01H 71/04, G01H 1/00

(54) **PROCÉDÉ DE DÉTECTION POUR UNE INSTALLATION ÉLECTRIQUE, DISPOSITIF DE DÉTECTION ET INSTALLATION ÉLECTRIQUE ASSOCIÉS**

(30) Priorité: 13.12.2024 FR 2414072
(71) Demandeur: SCHNEIDER ELECTRIC INDUSTRIES SAS, 92500 Rueil-Malmaison (FR)
(72) Inventeur: BATTAIL, Sylvain, 38530 PONTCHARRA (FR); AGNAOU, Abderrahmane, 38100 GRENOBLE (FR); BEN MAHMOUD, Mohamed Anis, 38000 Grenoble (FR); RAISIGEL, Hynek, 38120 Saint Egrève (FR)
(74) Mandataire: Lavoix

(57) **Abrégé**

Ce procédé de détection est mis en œuvre pour une installation électrique (10) comprenant un support (22), sur lequel est monté au moins un disjoncteur (20) et un capteur de vibration (30). Lors du déclenchement du disjoncteur (20), on mesure au moins une grandeur caractéristique des vibrations générées par le disjoncteur (20), les mesures de vibration étant reçues par une unité de contrôle (40) puis comparées à au moins un critère de détection prédéfini, chaque critère de détection étant préalablement enregistré dans une mémoire de l'unité de contrôle (40). En résultat de la comparaison, on détecte le déclenchement du disjoncteur (20).

## Description

La présente invention concerne un procédé de détection pour une installation électrique, ainsi qu'un dispositif de détection configuré pour mettre en œuvre un tel procédé de détection, et qu'une installation électrique comprenant un tel dispositif de détection.

On s'intéresse ici aux installations électriques comprenant au moins un support, tel qu'un rail ou une platine, configuré pour recevoir un ou plusieurs disjoncteurs montés sur le support. Lorsqu'un défaut électrique survient, entrainant le déclenchement d'un disjoncteur, il est avantageux d'envoyer un signal d'alerte, par exemple à une personne en charge de la maintenance.

**Il** est connu d'intégrer un capteur de courant à chaque disjoncteur, cependant de tels capteurs renchérissent significativement le coût des disjoncteurs, ce qui n'est pas souhaitable. **Il** est également connu d'équiper l'installation électrique existante avec des capteurs de courant, seulement la mise en place de chaque capteur de courant est fastidieuse, les capteurs et les câbles de connexion associés occupant en outre un espace significatif au sein de l'installation électrique. US-2016/327611-A1 décrit l'utilisation de capteurs de vibrations fixés au moyen d'aimants au voisinage de disjoncteur électrique, tandis que US-2004/372353-A1 décrit l'analyse des vibrations générées lors du déclenchement d'un disjoncteur, et que US-2023/090370-A1 décrit un capteur de vibration placé sur la poignée d'un disjoncteur.

C'est à ces problèmes qu'entend plus particulièrement remédier l'invention, en proposant une méthode de détection pour une installation électrique qui soit facile à mettre en œuvre.

À cet effet, l'invention concerne un procédé de détection pour une installation électrique, dans lequel :
- l'installation électrique comprend :
   - un support, propre au montage d'au moins un disjoncteur,
   - un disjoncteur, qui est monté sur le support,
   - un capteur de vibration, qui est monté sur le support et qui est propre à mesurer au moins une grandeur caractéristique des vibrations générées par le disjoncteur lors du déclenchement du disjoncteur, et
   - une unité de contrôle, qui est configurée pour recevoir les mesures du capteur de vibration,
- le procédé de détection comprend :
   - lors du déclenchement du disjoncteur, la mesure d'au moins une grandeur caractéristique des vibrations générées par le disjoncteur, au moyen du capteur de vibration,
   - la réception des mesures du capteur de vibration par l'unité de contrôle,
   - la comparaison des mesures de vibration à au moins un critère de détection prédéfini, chaque critère de détection étant préalablement enregistré dans une mémoire de l'unité de contrôle,
   - en résultat de la comparaison, la détection d'un déclenchement du disjoncteur.

Grâce à l'invention, le capteur de vibration est associé à un support et permet de détecter le déclenchement de chaque disjoncteur monté sur ce support, sans branchement direct entre le capteur de vibration et chaque disjoncteur. La mise en place du capteur de vibration est facile et rapide à effectuer. En outre, le capteur de vibration présente une taille réduire, notamment relativement aux disjoncteurs. Le capteur de vibration est ainsi peu encombrant lorsqu'il est mis en place dans l'installation électrique. La mise en place du capteur est ainsi facile à réaliser, et la méthode de détection facile à mettre en œuvre.

Selon des aspects avantageux mais non obligatoires de l'invention, un tel procédé de détection peut incorporer une ou plusieurs des caractéristiques suivantes prises isolément ou selon toute combinaison techniquement admissible :
- Le capteur de vibration est configuré pour commuter entre un état de sommeil, dans lequel le capteur de vibration ne consomme pas d'énergie, et un état d'éveil, dans lequel le capteur de vibration mesure au moins une grandeur caractéristique des vibrations et transmet les mesures à l'unité de contrôle, le capteur de vibration étant configuré pour :
   - passer de l'état de sommeil à l'état d'éveil lorsque le capteur de vibration subit des vibrations dont au moins une grandeur caractéristique est supérieure à un seuil d'éveil prédéfini, et
   - passer de l'état d'éveil à l'état de sommeil au plus tard au bout d'un intervalle de temps prédéterminé,
   alors que, lors du déclenchement du disjoncteur, la mesure de la au moins une grandeur caractéristique est précédée d'une étape initiale de réveil du capteur de vibration, au cours de laquelle le capteur de vibration, initialement à l'état de sommeil, passe à l'état d'éveil sous l'effet des vibrations générées par le déclenchement du disjoncteur, la mesure de la au moins une grandeur caractéristique se faisant ensuite à l'aide du capteur de vibration à l'état d'éveil.
- Plusieurs critères de détection sont préalablement enregistrés dans la mémoire de l'unité de contrôle, chaque critère de détection étant associé, de manière univoque, à un type de disjoncteur et à un type de défaut électrique susceptible de causer le déclenchement du disjoncteur du type considéré,
   alors qu'au cours de l'étape de comparaison, les mesures de la au moins une grandeur caractéristique sont comparées aux critères de détection associés au type de disjoncteur considéré,
   et que la détection du déclenchement comprend aussi l'identification du type de défaut électrique ayant causé le déclenchement du disjoncteur considéré.
- Chaque critère de détection est associé, de manière univoque, à un type de disjoncteur, à un type de support sur lequel le disjoncteur est susceptible d'être monté et à un type de défaut électrique susceptible de causer le déclenchement du disjoncteur du type considéré.
- Pour chaque type de disjoncteur, les types de défauts électriques susceptibles de causer le déclenchement du disjoncteur incluent les surintensités et les courts-circuits.

L'invention concerne aussi un dispositif de détection, qui comprend :
- un premier capteur de vibration, qui est configuré pour être monté sur un support de disjoncteur et qui est propre à mesurer au moins une grandeur caractéristique des vibrations générées par le disjoncteur lors du déclenchement du disjoncteur,
- une unité de contrôle, qui est configurée pour recevoir les mesures du capteur de vibration,
dans lequel le dispositif de détection est configuré pour mettre en œuvre le procédé de détection tel que défini précédemment.

Ce dispositif de détection induit les mêmes avantages que ceux mentionnés ci-dessus au sujet du procédé de détection de l'invention.

L'invention concerne aussi une installation électrique, qui comprend :
- un premier support, propre au montage d'au moins un disjoncteur,
- un premier disjoncteur, qui est monté sur le premier support,
- le dispositif de détection tel que défini précédemment,
dans laquelle le premier capteur de vibration est monté sur le premier support.

Avantageusement :
- Plusieurs disjoncteurs sont montés sur le premier support, le premier capteur de vibration étant propre à mesurer les accélérations générées par le déclenchement de l'un quelconque des disjoncteurs montés sur le premier support.
- Le premier support est choisi parmi un rail de montage ou une platine de montage.
- L'installation électrique ménage une enceinte,
   alors que l'installation électrique comprend, outre le premier support, au moins un support additionnel, le premier support et chaque support additionnel étant reçu dans l'enceinte,
   que l'installation électrique comprend, outre le premier capteur de vibration, au moins un capteur de vibration additionnel, chaque capteur de vibration additionnel étant monté sur un support additionnel respectif,
   et que l'unité de contrôle est configurée pour recevoir les mesures du premier capteur de vibration et de chaque capteur de vibration additionnel.

L'invention sera mieux comprise, et d'autres avantages de celle-ci apparaîtront plus clairement à la lumière de la description qui va suivre, d'un mode de réalisation d'un procédé de détection, d'un dispositif de détection et d'une installation électrique, conformes à son principe, donnée uniquement à titre d'exemple et faite en référence aux dessins annexés, dans lesquels :
- [Fig 1] la figure 1 est une représentation schématique d'une installation électrique conforme à l'invention ;
- [Fig 2] la figure 2 représente, sur trois inserts a), b) et c), un capteur de vibration de l'installation électrique de la figure 1, représenté en perspective sous deux angles de vue différents, et une unité de contrôle de l'installation électrique de la figure 1, représentée schématiquement ;
- [Fig 3] la figure 3 est un exemple de mesure du capteur de vibration de l'installation électrique, et

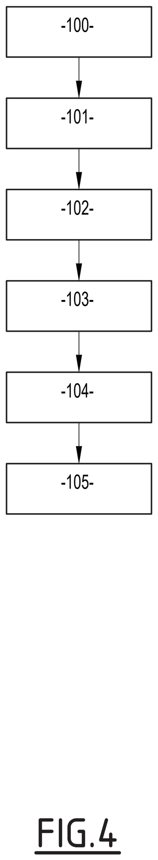

- [Fig 4] la figure 4 est une représentation synoptique illustrant un procédé de détection mis en œuvre par l'installation électrique de la figure 1.

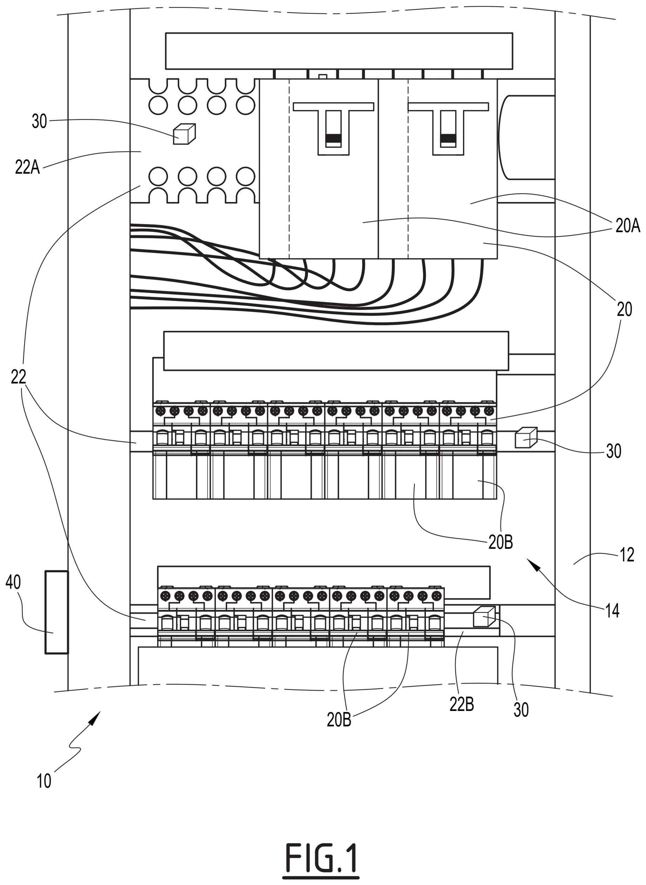

Une installation électrique 10 conforme à un mode de réalisation de l'invention est représentée à la figure 1. L'installation électrique 10, dite aussi simplement « installation 10 » dans le cadre de la présente description, est configurée pour relier une source de puissance électrique à une ou plusieurs charges électriques. La source de puissance et les charges électriques ne sont pas représentées.

L'installation électrique 10 comprend ici une armoire 12, qui ménage une enceinte 14, prévue pour recevoir plusieurs appareils électriques, en particulier pour recevoir des disjoncteurs 20. L'armoire 12 comprend ici plusieurs supports 22, qui sont reçus dans l'enceinte 14 et sur lesquels sont montés les disjoncteurs 20. En particulier, chaque support 22 est avantageusement configuré pour que plusieurs disjoncteurs 20 y soient montés. Une porte est généralement prévue pour refermer l'enceinte 14. La porte n'est pas représentée.

Les supports 22 incluent avantageusement des supports de plusieurs types. Les supports 22 d'un type donné sont avantageusement configurés pour qu'un ou plusieurs disjoncteurs d'un type donné y soient montés. Dans l'exemple illustré, les supports 22 incluent un premier support 22A d'un premier type, qui est ici une platine. Les supports 22 incluent, outre le premier support 22A, un deuxième support 22B d'un deuxième type, qui est ici un rail de montage présentant un profil en forme de Ω - oméga -, dit aussi rail DIN. D'autres types de supports sont bien entendu envisageables, par exemple un panneau fixé en regard d'un fond de l'armoire 12, etc.

Les supports 20 sont généralement réalisés en métal, en particulier en acier. Les supports 20 sont avantageusement réalisés en un matériau ferromagnétique, c'est-à-dire susceptible d'être attiré par un aimant. Un aimant est un objet solide réalisé en un matériau magnétique.

Dans l'exemple de la figure 1, un seul premier support 22A - ici la platine - est visible, le premier support 22A recevant deux disjoncteurs d'un premier type, dits « premiers disjoncteur 20A », tandis que deux deuxièmes supports 22B - ici deux rails DIN - sont visibles, chaque deuxième support 22B recevant plusieurs disjoncteurs d'un deuxième type, dits « deuxièmes disjoncteur 20B ». Les types de disjoncteurs 20 dépendent notamment du calibre de ces disjoncteurs. De manière générale, les principes de l'invention sont transposables quel que soit le nombre et le type de support, pourvu que l'installation électrique 10 comprenne au moins un support 22, ainsi que quel que soit le nombre et le type du ou des disjoncteurs 20 qui sont montés sur le support 22 considéré.

Chaque disjoncteur 20 monté sur le support 22 associé est ainsi mécaniquement couplé à ce support 20. Lors du déclenchement du disjoncteur 20, le choc et les vibrations généré par le mécanisme de coupure du disjoncteur 20 sont transmis au support 22 sur lequel est monté le disjoncteur 20, les vibrations générées par le déclenchement du disjoncteur 20 étant ainsi mesurables.

Pour au moins un des supports 20, l'installation électrique 10 comprend également un capteur de vibration 30, qui est monté sur le support considéré et qui est propre à mesurer des vibrations générées par le disjoncteur 20 lors du déclenchement du disjoncteur 20. De préférence, un exemplaire du capteur de vibration 30 est monté sur chacun des supports 22 sur lequel est monté un ou plusieurs disjoncteurs 20. Dans l'exemple de la figure 1, chacun des supports 22 est équipé d'un capteur de vibration 30 respectif. Les capteurs de vibration 30 sont ici montés sur le même côté du support 22 que les disjoncteurs 20 montés sur ce support 22, c'est-à-dire ici sur un côté avant du support 22. En variante non illustrée, les capteurs de vibration 30 sont montés sur un côté arrière du support 22, un tel agencement étant particulièrement avantageux lorsque la place manque sur le côté avant du support 22.

L'installation électrique 10 comprend également une unité de contrôle 40, qui est configurée pour recevoir les mesures de chaque capteur de vibration 30. L'unité de contrôle 40 est ici située à l'extérieur de l'armoire 12. En variante non illustrée, l'unité de contrôle 40 est située à l'intérieur de l'armoire 12.

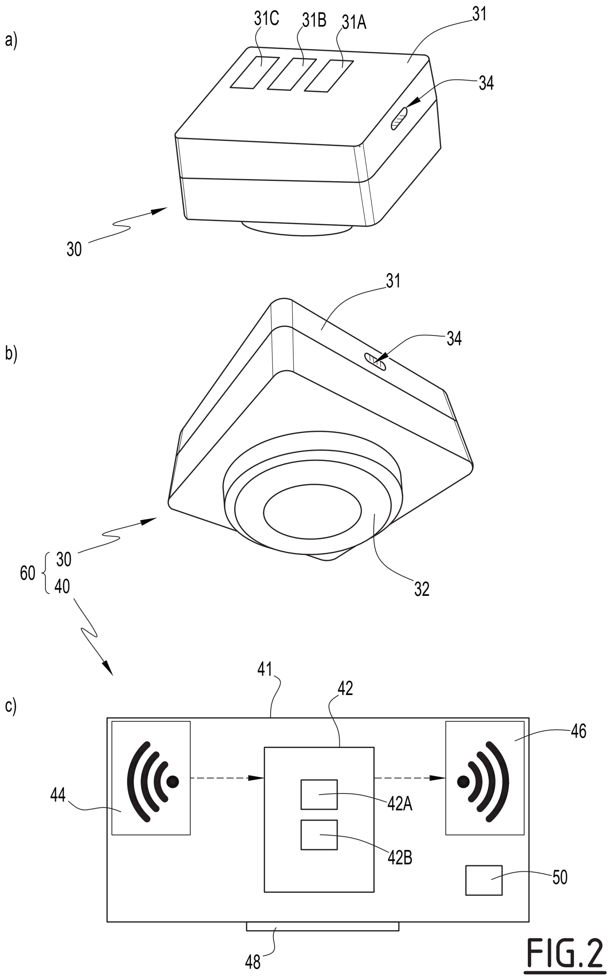

Un exemplaire du capteur de vibration 30 est décrit en référence aux inserts a) et b) de la figure 2. Ce qui est valable pour un capteur de vibration 30 est transposable aux autres capteurs de vibration 30. Le capteur de vibration 30, dit aussi simplement « capteur 30 » dans la présente description, comprend un boitier 31 qui renferme l'appareillage nécessaire au bon fonctionnement du capteur de vibration 30.

De manière générale, les vibrations sont des ondes mécaniques, qui transitent dans le support 22. Plusieurs méthodes de mesure des vibrations sont connues, par exemple avec contact au moyen d'un accéléromètre, auquel cas on mesure une accélération, soit sans contact au moyen d'un laser, auquel cas on mesure un déplacement, qui est ensuite dérivable en vitesse ou en accélération, etc.

Ainsi, de manière générale le capteur de vibration 30 est propre à au moins une grandeur caractéristique des vibrations transitant dans le support 22 à la du déclenchement du disjoncteur 20. Les « grandeurs caractéristiques » des vibrations incluent un déplacement et/ou une vitesse et/ou une accélération.

Dans le cadre de la présente invention, le capteur de vibration 30 est préférentiellement un capteur d'accélération. Autrement dit la grandeur caractéristique mesurée par le capteur de vibration 30 est une accélération. La description qui suit est faite dans le cas où le capteur de vibration 30 mesure des accélérations, les principes de l'invention étant bien entendu transposables au cas où le capteur de vibration mesure une autre grandeur caractéristique des vibrations générées lors du déclenchement du disjoncteur, par exemple un déplacement ou une vitesse.

Le capteur de vibration 30 comprend ici un accéléromètre 31A, qui est configuré pour mesurer des accélérations générées par les vibrations du support 22. L'accéléromètre 31A est par exemple basé sur un système micro-électro-mécanique, connu sous l'acronyme anglais MEMS. Le capteur de vibration 30 comprend avantageusement des moyens de transmission 31B, qui sont prévus pour la transmission des mesures de l'accéléromètre 31A à l'unité de contrôle 40. Les moyens de transmission 31B sont des moyens de transmission sans fils, par exemple selon un protocole dit « Zigbee », tel que défini par la norme IEEE 802.15.4:2020.

Le capteur de vibration 30 comprend une source d'énergie électrique, par exemple un accumulateur 31C ou une pile électrique, la source d'énergie électrique étant prévue pour alimenter l'accéléromètre 31A et les moyens transmission 31B. Ainsi le capteur de vibration 30 est autonome, au sens où le capteur de vibration 30 ne demande pas de tirer des fils, pour son alimentation ou la transmission des mesures à l'unité de contrôle 40. Comme décrit dans la suite, la source d'énergie électrique est prévue pour que le capteur de vibration 30 puisse fonctionner de manière autonome pendant plusieurs mois, de préférence pendant plusieurs années.

Le capteur de vibration 30 comprend avantageusement un aimant 32, qui est prévu pour le montage du capteur 30 sur le support 22 correspondant. Dans l'exemple non limitatif de la figure 2 b), l'aimant 32 présente une forme d'anneau et est situé sur une face inférieure du boitier 31. Ainsi le capteur 30 peut être placé, selon les besoins ou selon l'espace disponible, sur une face avant ou sur une face arrière du support 22 considéré. La face avant est orientée vers l'utilisateur lorsque l'utilisateur se tient devant l'armoire 12. En variante non illustrée, le capteur de vibration 30 est fixé au support 22 correspondant par clipsage, ou encore par vissage.

Le capteur de vibration 30 comprend avantageusement un connecteur 34, qui est prévu par exemple pour la connexion à un ordinateur lors d'une étape de configuration du capteur de vibration 30, par exemple pour réaliser un appairage du capteur de vibration 30 à l'unité de contrôle 40. Alternativement ou en complément, le connecteur 34 sert à recharger l'accumulateur 31C.

On décrit à présent l'unité de contrôle 40, en référence notamment à la figure 2 c).

L'unité de contrôle 40 comprend boitier 41 qui renferme l'appareillage nécessaire au bon fonctionnement de l'unité de contrôle 40. L'unité de contrôle 40 comprend avantageusement une unité de calcul 42, qui comprend un microprocesseur 42A et une mémoire 42B. L'unité de contrôle 40 comprend des moyens de réception 44, qui sont configurés pour coopérer avec les moyens transmission 31B du capteur de vibration, de manière à recevoir les mesures de l'accéléromètre 31A. Ainsi les moyens de réception 44 sont avantageusement des moyens de réception par radiofréquences, qui fonctionnement préférentiellement selon le protocole Zigbee. Par exemple, les mesures reçues sont transmises à l'unité de calcul 42, en particulier sont enregistrées dans la mémoire 42B.

L'unité de contrôle 40 comprend des moyens de communication 46, de préférence des moyens de communication par radiofréquences, qui sont prévus pour envoyer un signal d'alerte à un utilisateur. Selon un premier exemple non limitatif, les moyens de communication 46 sont aptes à être connecté à Internet, par exemple par protocole WiFi, et permettent ainsi d'envoyer le signal d'alerte par messagerie. Selon un autre exemple, les moyens de communication 46 utilisent un autre protocole pour l'envoi du signal d'alerte, par exemple par protocole Zigbee, Bluetooth, Wan, etc.

Les moyens de réception 44 et les moyens de communication 46 sont ici décrits fonctionnellement et représentés séparément, sans préjuger que dans la réalité, les moyens de réception 44 et de communication 46 peuvent structurellement partager un ou plusieurs composants, par exemple partager une même antenne, etc.

En alternative non illustré, l'unité de contrôle 40 comprend des moyens d'alerte visuelle, tels que des LEDs ou un écran, les moyens d'alerte visuelle étant visibles à l'extérieur du boitier 41.

L'unité de contrôle 40 comprend avantageusement des moyens de fixation 48, qui sont prévus pour la fixation de l'unité de contrôle 40 à l'armoire 12. Dans l'exemple illustré, les moyens de fixation 48 comprennent avantageusement un aimant, l'unité de contrôle 40, qui permet à l'utilisateur de fixer l'unité de contrôle 40 à l'armoire 12, à la main et sans outils, dans la position de son choix, notamment en fonction des contraintes d'encombrement de l'installation 10, de la place disponible dans l'enceinte 14, etc. Dans l'exemple illustré, l'unité de contrôle 40 est fixée à l'extérieur de l'armoire 12. En variante non illustrée l'unité de contrôle 40 est fixée à l'intérieur de l'armoire 12, dans l'enceinte 14.

L'unité de contrôle 40 est avantageusement autonome en énergie électrique, c'est-à-dire que l'unité de contrôle 40 comprend un accumulateur 50, qui est configuré pour alimenter en énergie électrique les autres organes de l'unité de contrôle 40, notamment l'unité de calcul 42, les moyens de réception 44, les moyens de communication 46, etc. En complément ou en remplacement de l'accumulateur 50, l'unité de contrôle 40 est alimenté en énergie par un câble d'alimentation - non représenté -.

On comprend qu'une armoire électrique 10 existante, comprenant un ou plusieurs disjoncteurs 20 montés sur un ou plusieurs supports 22, l'armoire 10 étant initialement dépourvue de l'unité de contrôle 40 et de capteur de vibration 30, peut ainsi être équipée d'un exemplaire de l'unité de contrôle 40 et d'un ou plusieurs exemplaires du capteur de vibration 30, de manière à superviser le déclenchement du ou des disjoncteurs 20.

Avantageusement, l'unité de contrôle 40 est appairée à chacun des capteurs de vibration 40 situé dans l'armoire 12, l'unité de contrôle 40 recevant seulement les mesures transmises par les capteurs de vibration 30 situées dans l'armoire 12 considérée, et pas les mesures transmises par d'éventuels autres capteurs, situés dans d'autres armoires. L'unité de contrôle 40 et le ou les capteurs de vibration 30 associés forment ensemble un dispositif de détection 60.

Le dispositif de détection 60, et par extension l'armoire 12 équipée d'un tel dispositif de détection, sont ainsi configurés pour la mise en œuvre d'un procédé de détection avantageux, décrit dans la suite.

Le procédé de détection comprend ainsi :
- une première étape 101, au cours de laquelle, lors du déclenchement du disjoncteur 20, on mesure au moins une grandeur caractéristique des vibrations générées par le disjoncteur 20, au moyen du capteur de vibration 30. Dans l'exemple illustré, on mesure donc une accélération.
- une deuxième étape 102, subséquente à la première étape 101 de mesure, au cours de laquelle les mesures du capteur de vibration 30 sont reçues par l'unité électronique de contrôle 40. La transmission des mesures du capteur de vibration 30 se fait ici par coopération des moyens de transmission 31B du capteur de vibration 30 avec les moyens de réception 44 de l'unité de contrôle 40.
- une troisième étape 103, subséquente à la deuxième étape 102 de mesure, au cours de laquelle les mesures de vibrations sont comparées à au moins un critère de détection prédéfini, chaque critère de détection étant préalablement enregistré dans la mémoire 42B de l'unité de contrôle 40,
- une quatrième étape 104, subséquente à la troisième étape 103 de comparaison 103, au cours de laquelle on détecte un déclenchement du disjoncteur 20 en résultat de la troisième étape 103 de comparaison.

La troisième étape 103 de comparaison et la quatrième étape 104 de détection sont ici réalisées par le microprocesseur 42A.

Avantageusement, le procédé de détection comprend une cinquième étape 105, subséquente à la quatrième étape 104 de détection, au cours de laquelle un signal d'alerte est transmis, à l'intention d'un utilisateur, à l'aide des moyens de communication 46. Avantageusement, le signal d'alerte inclut des informations relatives à l'armoire 10 dans laquelle est situé le disjoncteur 20 ayant déclenché. Avantageusement, le signal d'alerte inclut des informations relatives au capteur de vibration 30 ayant mesuré les accélérations générées par le disjoncteur 20 ayant déclenché. Autrement dit, le signal d'alerte inclut des informations relatives au support 22 sur lequel est fixé le disjoncteur 20 ayant déclenché. L'utilisateur peut ainsi rapidement localiser le disjoncteur 20 ayant déclenché, et prendre les mesures adéquates, notamment vérifier la charge électrique reliée à ce disjoncteur 20, réarmer le disjoncteur 20, etc.

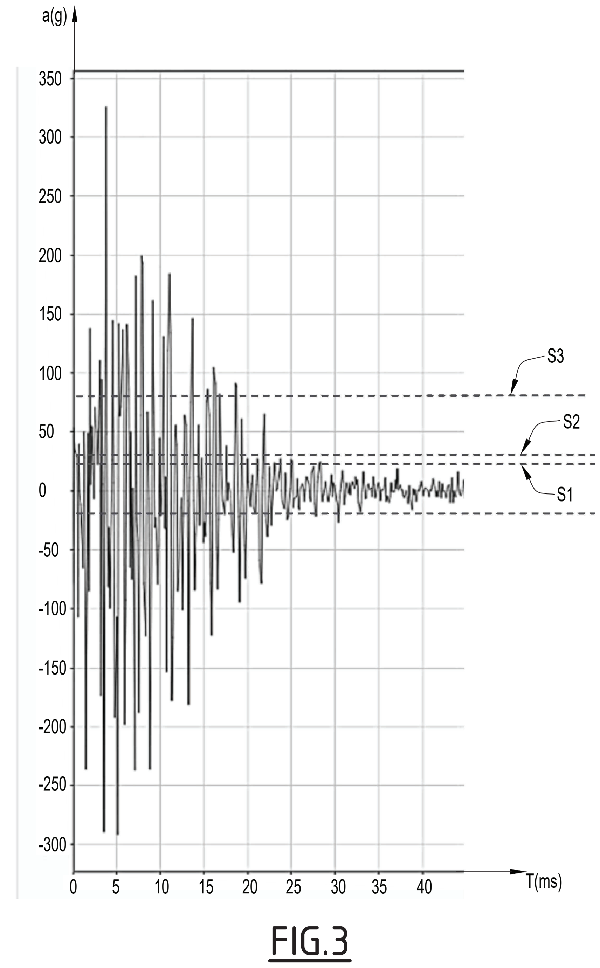

Un exemple de mesure signal d'accélération est illustré à la figure 3. La mesure est faite pour un type de disjoncteur 20 donné, le disjoncteur 20 étant monté sur un type de support 22 donné, et pour un type de défaut électrique donné. L'axe des abscisses est le temps « T » en millisecondes - ms -, tandis que l'axe des ordonnées est l'accélération « a » donnée en « g », 1 *g* étant est égal à l'accélération de la pesanteur à la surface de la Terre, soit environ 9,80 m/s².

En l'absence de déclenchement, l'accélération mesurée par le capteur de vibration 30 reste relativement basse. Des pics de vibrations peuvent survenir, par exemple un claquement de porte de l'armoire 12 ou un choc sur l'armoire 12, mais ces pics restent bien inférieurs aux vibrations constatées en cas de déclenchement d'un disjoncteur 20 et mesurées au niveau des supports 22 par les capteurs de vibration 30. Avantageusement, le capteur de vibration 30 est configuré pour commuter entre un état de sommeil, dans lequel le capteur de vibration 30 consomme une énergie minimale, voire nulle, et un état d'éveil, dans lequel le capteur de vibration 30 mesure des accélérations et transmet les mesures à l'unité de contrôle 40. Le capteur de vibration 30 est configuré pour passer de l'état de sommeil à l'état d'éveil lorsque le capteur de vibration 30 subit une vibration dont au moins une grandeur caractéristique - ici une accélération - est supérieure à un seuil d'éveil S1 prédéfini, et pour passer de l'état d'éveil à l'état de sommeil au plus tard au bout d'un intervalle de temps ΔT1 prédéterminé.

Ainsi, à l'état de sommeil, l'accumulateur 31C se décharge très lentement. De préférence, l'accumulateur 31C stocke suffisamment d'énergie pour que le capteur de vibration 30 puisse rester en sommeil pendant une durée de plusieurs années, par exemple cinq ans. Selon des exemples, à l'état de sommeil, les moyens de transmission 31B ne sont pas alimentés en énergie électrique.

Lors du déclenchement du disjoncteur 20, la première étape 101 de mesure de la grandeur caractéristique - ïci l'accélération - est précédée d'un étape initiale 100 de réveil du capteur de vibration 30, au cours de laquelle le capteur de vibration 30, initialement à l'état de sommeil, passe à l'état d'éveil sous l'effet des vibrations générée par le déclenchement du disjoncteur. La mesure de la grandeur caractéristique - ici l'accélération - se fait ensuite, au cours de la première étape 101 de mesure, à l'aide du capteur de vibration 30 à l'état d'éveil.

Le seuil d'éveil S1 est choisi notamment en fonction du type de disjoncteur 20 et du type de support 22 sur lequel le disjoncteur 20 est monté. Dans l'exemple de la figure 3, le seuil d'éveil S1 est égal à 25 g. Le capteur de vibration 30 est configuré pour se réveiller le plus rapidement possible, typiquement en quelques millisecondes, par exemple en 2 ms. L'intervalle de temps ΔT1 pendant lequel le capteur de vibration 30 reste à l'état d'éveil, autrement dit mesure des grandeurs caractéristiques - ici des accélérations - et transmet cette mesure à l'unité de contrôle, est choisi suffisamment grand pour que les vibrations générées par le déclenchement du disjoncteur 30 soient suffisamment amorties, et inférieures au premier seuil d'éveil S1, à la fin de l'intervalle de temps ΔT1. De préférence, l'intervalle de temps ΔT1 est supérieur à 50 ms, typiquement de l'ordre de 200 ms.

De manière connue, les disjoncteur 20 sont prévus pour protéger les installations ou les utilisateurs contre plusieurs types de défauts électriques. Les divers types de défauts électriques incluent notamment les surintensités, les courts-circuits, les défauts différentiels, etc. Il a été constaté qu'en fonction du type de défaut électrique ayant causé le déclenchement du disjoncteur 20, certaines caractéristiques du signal mesuré par le capteur de vibration 30 changeaient. Autrement dit, en complément de la détection de déclenchement, en analysant le signal mesuré par le capteur de vibration 30, il est possible d'identifier le type de défaut électrique ayant causé le déclenchement du disjoncteur 20.

Avantageusement, plusieurs critères de détection sont préalablement enregistrés dans la mémoire 42B de l'unité de contrôle 40, chaque critère de détection étant associé, de manière univoque, à un type de disjoncteur et à un type de défaut électrique susceptible de causer le déclenchement du disjoncteur du type considéré. De préférence, chaque critère de détection est associé, de manière univoque, à un type de disjoncteur 20, à un type de support 22 sur lequel le disjoncteur 20 est susceptible d'être monté, et à un type de défaut électrique susceptible de causer le déclenchement du disjoncteur 20 du type considéré.

Avantageusement, lors de la mise en place du ou des capteurs de vibration 30 dans une armoire 10 existante, les informations relatives au type de support 22 et au type de disjoncteurs 20 montés sur ce support 22 sont spécifiées dans l'unité de contrôle 40, par exemple par l'installateur. Les critères de détection associés sont préalablement enregistrés dans la mémoire 42B de l'unité de contrôle 40. Ainsi, lorsque l'unité de contrôle 40 reçoit le signal de mesure de la grandeur caractéristique en provenance du capteur de vibration 30 considéré, les critères de détection pertinents sont disponibles, et l'unité de contrôle 40 effectue la troisième étape de comparaison 103 seulement sur la base des critères de détection correspondants au type de support 22 et au type de disjoncteur 20 considéré.

À la suite de la troisième étape 103 de comparaison, l'unité de contrôle 40 identifie, au cours de la quatrième étape 104 de détection, le type de défaut électrique ayant causé le déclenchement du disjoncteur 30.

Pour chaque type de disjoncteur, les critères de détection enregistrés dans la mémoire 42B associés aux défauts électriques susceptibles de causer le déclenchement du disjoncteur incluent de préférence les surintensités et les courts-circuits. Sur le graphe de la figure 3, le critère de détection associé à une surintensité est par exemple une amplitude de pic à pic supérieure à un deuxième seuil S2. Bien entendu le deuxième seuil S2 est supérieur au premier seuil S1. Le deuxième seuil S2 est ici de l'ordre de 40 g. Le critère de détection associé aux courts-circuits est ici une amplitude maximale supérieure à un troisième seuil S3 prédéterminé. Le troisième seuil S3 est ici de l'ordre de 80 g.

Les modes de réalisation et les variantes mentionnées ci-dessus peuvent être combinés entre eux pour générer de nouveaux modes de réalisation de l'invention.

## Revendications

1. Procédé de détection pour une installation électrique (10), dans lequel :
- l'installation électrique (10) comprend :
• un support (22), propre au montage d'au moins un disjoncteur (20),
• un disjoncteur (20), qui est monté sur le support (22),
• un capteur de vibration (30), qui est monté sur le support (22) et qui est propre à mesurer au moins une grandeur caractéristique des vibrations générées par le disjoncteur (20) lors du déclenchement du disjoncteur (20),
• une unité de contrôle (40), qui est configurée pour recevoir les mesures du capteur de vibration (30),
- le procédé de détection comprend :
• lors du déclenchement du disjoncteur (20), la mesure (101) d'une grandeur caractéristique des vibrations générées par le disjoncteur (20), au moyen du capteur de vibration (30),
• la réception (102) des mesures du capteur de vibration (30) par l'unité de contrôle (40),
• la comparaison (104) des mesures de vibration à au moins un critère de détection prédéfini, chaque critère de détection étant préalablement enregistré dans une mémoire (42B) de l'unité de contrôle (40),
• en résultat de la comparaison, la détection (105) d'un déclenchement du disjoncteur (20).

2. Procédé de détection selon la revendication 1, dans lequel :
- le capteur de vibration (30) est configuré pour commuter entre un état de sommeil, dans lequel le capteur de vibration (30) ne consomme pas d'énergie, et un état d'éveil, dans lequel le capteur de vibration (30) mesure au moins une grandeur caractéristique des vibrations et transmet les mesures à l'unité de contrôle (40), le capteur de vibration (30) étant configuré pour :
• passer de l'état de sommeil à l'état d'éveil lorsque le capteur de vibration (30) subit des vibrations dont au moins une grandeur caractéristique est supérieure à un seuil d'éveil (S1) prédéfini, et
• passer de l'état d'éveil à l'état de sommeil au plus tard au bout d'un intervalle de temps (ΔT1) prédéterminé,
- lors du déclenchement du disjoncteur (20), la mesure (101) de la au moins une grandeur caractéristique est précédée d'une étape initiale (100) de réveil du capteur de vibration (30), au cours de laquelle le capteur de vibration (30), initialement à l'état de sommeil, passe à l'état d'éveil sous l'effet des vibrations générées par le déclenchement du disjoncteur (20), la mesure de la au moins une grandeur caractéristique se faisant ensuite à l'aide du capteur de vibration (30) à l'état d'éveil.

3. Procédé de détection selon l'une quelconque des revendications 1 ou 2, dans lequel :
- plusieurs critères de détection sont préalablement enregistrés dans la mémoire (42B) de l'unité de contrôle (40), chaque critère de détection étant associé, de manière univoque, à un type de disjoncteur (20) et à un type de défaut électrique susceptible de causer le déclenchement du disjoncteur (20) du type considéré,
- au cours de l'étape de comparaison (103), les mesures de la au moins une grandeur caractéristique sont comparées aux critères de détection associés au type de disjoncteur (20) considéré,
- la détection du déclenchement comprend aussi l'identification du type de défaut électrique ayant causé le déclenchement du disjoncteur (20) considéré.

4. Procédé de détection selon la revendication 3, dans lequel :
- chaque critère de détection est associé, de manière univoque, à un type de disjoncteur (20), à un type de support (22) sur lequel le disjoncteur (20) est susceptible d'être monté et à un type de défaut électrique susceptible de causer le déclenchement du disjoncteur (20) du type considéré.

5. Procédé de détection selon l'une quelconque des revendications 3 ou 4, dans lequel :
- pour chaque type de disjoncteur (20), les types de défauts électriques susceptibles de causer le déclenchement du disjoncteur (20) incluent les surintensités et les courts-circuits.

6. Dispositif de détection (60), comprenant :
- un premier capteur de vibration (30), qui est configuré pour être monté sur un support (22) de disjoncteur (20) et qui est propre à mesurer au moins une grandeur caractéristique des vibrations générées par le disjoncteur (20) lors du déclenchement du disjoncteur (20),
- une unité de contrôle (40), qui est configurée pour recevoir les mesures du capteur de vibration (30),
dans lequel le dispositif de détection (60) est configuré pour mettre en œuvre le procédé de détection conforme à l'une quelconque des revendications 1 à 5.

7. Installation électrique (10), dans laquelle :
- l'installation électrique (10) comprend :
• un premier support (22), propre au montage d'au moins un disjoncteur (20),
• un premier disjoncteur (20), qui est monté sur le premier support (22),
• le dispositif de détection selon la revendication 6,
- le premier capteur de vibration (30) est monté sur le premier support (22).

8. Installation électrique (10) selon la revendication 7, dans laquelle :
- plusieurs disjoncteurs (20) sont montés sur le premier support (22),
- le premier capteur de vibration (30) est propre à mesurer les accélérations générées par le déclenchement de l'un quelconque des disjoncteurs (20) montés sur le premier support (22).

9. Installation électrique (10) selon l'une quelconque des revendication 7 ou 8, dans laquelle :
- le premier support (22) est choisi parmi un rail de montage (22B) ou une platine (22A) de montage

10. Installation électrique (10) selon l'une quelconque des revendication 7 à 9, dans laquelle :
- l'installation électrique (10) ménage une enceinte (14),
- l'installation électrique (10) comprend, outre le premier support (22), au moins un support (22) additionnel, le premier support (22) et chaque support (22) additionnel étant reçu dans l'enceinte (14),
- l'installation électrique (10) comprend, outre le premier capteur de vibration (30), au moins un capteur de vibration (30) additionnel, chaque capteur de vibration (30) additionnel étant monté sur un support (22) additionnel respectif,
- l'unité de contrôle (40) est configurée pour recevoir les mesures du premier capteur de vibration (30) et de chaque capteur de vibration (30) additionnel.
